# FASCICULE DE BREVET EUROPEEN

(11) **EP 4 264 197 B1**
(45) Date de publication et mention de la délivrance du brevet: **11.09.2024**
(21) Numéro de dépôt: 21839535.8
(22) Date de dépôt: 17.12.2021
(51) Int. Cl.: G01F 1/66, G01F 15/00, G01F 15/063, G01F 15/075, E03B 9/02

(54) **MODULE D'ANALYSE DE LA CONSOMMATION D'UN FLUIDE EN SORTIE D'UNE VANNE**
MODUL ZUR ANALYSE DES VERBRAUCHS EINES EIN VENTIL VERLASSENDEN FLUIDS
MODULE FOR ANALYSING THE CONSUMPTION OF A FLUID LEAVING A VALVE

(30) Priorité: 18.12.2020 FR 2013710
(43) Date de publication de la demande: 25.10.2023
(73) Titulaire: Birdz, 92800 Puteaux (FR)
(72) Inventeur: ELIE, Vivien, 33370 FARGUES SAINT-HILAIRE (FR); PAQUET, François, 38138 LES COTES D'AREY (FR)
(74) Mandataire: Aquinov
(86) Numéro de dépôt international: PCT/EP2021/086453
(87) Numéro de publication internationale: WO 2022/129501

(56) Documents cités:
- WO-A1-2019/170289
- WO-A2-2015/134715
- CN-A- 111 636 516
- US-A1- 2019 316 983
- US-A1- 2020 378 859

## Description

L'invention concerne le domaine de l'analyse de la consommation d'un réseau de circulation d'un fluide. Plus précisément, l'invention concerne un module d'analyse de la consommation d'un fluide en sortie d'une vanne.

Dans certains secteurs, il est nécessaire de connaître en temps réel la consommation d'un réseau de circulation d'un fluide. C'est par exemple le cas pour un parc hydraulique, lequel est soumis à un quota de consommation d'eau. Afin de contrôler la conformité de la consommation du parc à ce quota, il est ainsi nécessaire de comptabiliser le volume d'eau consommé en temps réel au niveau de chacune des vannes de ce parc. CN111636516-A décrit une bouche d'incendie avec une vanne, qui peut estimer la consommation d'eau de la bouche d'incendie sur la base de la valeur de pression du réseau de canalisations et de la valeur d'ouverture de la bouche d'incendie par l'intermédiaire d'un micro-interrupteur rotatif vers l'avant de l'arbre de la vanne.

Or, certaines vannes n'intègrent pas nativement de compteur de consommation de fluide. C'est notamment le cas des poteaux d'incendie d'un parc hydraulique. Et il n'est pas aisé d'équiper un tel poteau avec un compteur d'eau, dans la mesure où l'intégration de ce compteur serait intrusive, avec un impact au niveau de la circulation d'eau dans le poteau. A l'inverse, il n'est pas souhaitable d'un point de vue économique de changer toutes les vannes d'un parc avec des vannes équipées nativement d'un compteur d'eau.

Il existe ainsi un besoin pour une solution permettant de connaître en temps réel la consommation d'un fluide en sortie d'une vanne, qui ne soit pas intrusive en ne requérant pas d'être agencée dans la zone de circulation du fluide de la vanne, et qui permette d'éviter d'avoir à remplacer la vanne.

La présente invention se place dans ce contexte, et vise à répondre à ce besoin.

A ces fins, l'invention a pour objet un module d'analyse de la consommation d'un fluide en sortie d'une vanne, comprenant :
a. un organe de manoeuvre rotatif destiné à être monté sur la vanne et apte à contrôler l'écoulement du fluide en sortie de la vanne,
b. un capteur de vibration agencé pour mesurer des vibrations de l'organe de manoeuvre,
c. un capteur de rotation agencé pour mesurer une rotation de l'organe de manoeuvre,
d. une unité de contrôle agencée pour détecter un écoulement de fluide en sortie de la vanne à partir des vibrations de l'organe de manoeuvre mesurées par le capteur de vibration et pour déterminer un débit de cet écoulement de fluide à partir des vibrations de l'organe de manoeuvre mesurées par le capteur de vibration et de la rotation de l'organe de manoeuvre mesurée par le capteur de rotation.

Selon l'invention, il est ainsi possible d'installer le module sur la vanne, en interfaçant l'organe de manoeuvre du module avec la vanne, sur un organe de manoeuvre de cette vanne déjà existant ou en remplacement d'un tel organe de manoeuvre déjà existant. La manipulation de cet organe de manoeuvre, par un utilisateur, et les vibrations que subit cet organe de manoeuvre lors de l'écoulement du fluide via la vanne permettent en outre de détecter cet écoulement de fluide et d'estimer le débit de cet écoulement. Ainsi, l'utilisation de capteurs de vibration et de rotation permet d'estimer de façon fiable la consommation de fluide en sortie de la vanne, sans toutefois nécessiter de s'immiscer dans la zone de circulation de fluide de la vanne. On comprend par ailleurs qu'il n'y a pas lieu de remplacer la vanne pour obtenir une estimation de la consommation de fluide en sortie de la vanne. L'invention répond ainsi parfaitement au besoin exposé.

Avantageusement, le capteur de vibration est un accéléromètre, notamment monté directement sur l'organe de manoeuvre rotatif du module. Par exemple, le capteur de rotation peut être un gyroscope, ou en variante un magnétomètre. Avantageusement, le capteur de rotation est agencé pour mesurer une position angulaire absolue de l'organe de manoeuvre, à partir d'une position initiale de référence, par exemple égale à 0°.

De préférence, l'organe de manoeuvre du module est réalisé au moins partiellement, notamment totalement, dans un matériau ferromagnétique.

Dans un mode de réalisation de l'invention, le module comporte un capteur de champ magnétique. Le cas échéant, l'unité de contrôle peut être agencée pour déterminer un débit de l'écoulement du fluide à partir des vibrations de l'organe de manoeuvre mesurées par le capteur de vibration, de la rotation de l'organe de manoeuvre mesurée par le capteur de rotation et des variations du champ magnétique mesurées par le capteur de champ magnétique. Avantageusement, le capteur de champ magnétique peut être un magnétomètre, notamment agencé pour mesurer des variations d'un champ magnétique au voisinage de l'organe de manoeuvre. Grâce à la présence du capteur de champ magnétique, l'unité de contrôle peut mettre en oeuvre des procédés de contrôle des différents capteurs du module, de sorte à minimiser la consommation électrique du module.

Avantageusement, le capteur de vibration est apte à emprunter une première configuration d'acquisition et une deuxième configuration d'acquisition, distincte de la première. Le cas échéant, lorsque le capteur de vibration est dans la première configuration et détecte une vibration d'intensité supérieure à un seuil donné, l'unité de contrôle peut être agencée pour commander le capteur de vibration pour qu'il emprunte la deuxième configuration. De préférence, l'unité de contrôle peut être agencée pour commander également le capteur de champ magnétique pour qu'il emprunte la configuration d'acquisition. Par exemple, ledit seuil peut être égal à 15 mg, où g est l'accélération de la pesanteur terrestre.

Avantageusement, dans sa première configuration, le capteur de vibration peut être apte à mesurer et/ou transmettre à l'unité de contrôle une vibration de l'organe de manoeuvre uniquement lorsque l'intensité de cette vibration est supérieure à un seuil donné, par exemple de 15 mg. Avantageusement, dans sa deuxième configuration, le capteur de vibration est apte à mesurer et/ou transmettre à l'unité de contrôle de façon sensiblement continue toutes les vibrations subies par l'organe de manoeuvre. De façon alternative ou cumulative, dans sa première configuration, le capteur de vibration peut être apte à acquérir des données selon une première fréquence donnée, et dans sa deuxième configuration, le capteur de vibration peut être apte à acquérir des données selon une deuxième fréquence donnée inférieure à la première fréquence donnée. La première fréquence d'acquisition peut par exemple être égale à 12,5 Hz et la deuxième fréquence d'acquisition peut par exemple être égale à 6,25 Hz. De préférence, la première configuration du capteur de vibration est une configuration par défaut.

On comprend que dans sa première configuration, le capteur de vibration est apte à détecter un choc subi par l'organe de manoeuvre, par exemple lorsqu'une clé rentre en contact avec l'organe de manoeuvre, ou encore pour détecter un début d'écoulement de fluide en sortie de la vanne. En revanche, dans sa deuxième configuration, les données relatives aux vibrations de l'organe de manoeuvre mesurées par le capteur de vibration permettent d'estimer le débit d'un écoulement de fluide en sortie de la vanne. Cette deuxième configuration est ainsi adoptée uniquement lorsqu'un choc, un début d'écoulement de fluide ou un début de rotation de l'organe de manoeuvre est détecté. La consommation électrique du capteur de vibration dans sa deuxième configuration étant généralement supérieure à sa consommation dans sa première configuration, ces caractéristiques permettent ainsi d'optimiser cette consommation électrique.

Selon un exemple de réalisation de l'invention, le capteur de rotation est apte à emprunter une configuration éteinte et une configuration d'acquisition. Le cas échéant, lorsque le capteur de vibration est dans la deuxième configuration et détecte une vibration d'intensité supérieure à un seuil donné et/ou lorsque le capteur de champ magnétique détecte une variation magnétique d'intensité supérieure à un seuil donné, l'unité de contrôle peut être agencée pour commander le capteur de rotation pour qu'il emprunte la configuration d'acquisition. Par exemple, ledit seuil peut être égal à 15 uT.

Dans une variante de cet exemple, on comprend que le capteur de vibration peut réveiller directement le capteur de rotation. Dans une autre variante, chacun des capteurs de champ magnétique et de rotation est apte à emprunter une configuration éteinte et une configuration d'acquisition. Le cas échéant, lorsque le capteur de vibration est dans la première configuration et détecte une vibration d'intensité supérieure à un seuil donné, l'unité de contrôle peut être agencée pour commander le capteur de vibration pour qu'il emprunte la deuxième configuration et pour commander le capteur de champ magnétique pour qu'il emprunte la configuration d'acquisition, et lorsque le capteur de champ magnétique est dans la configuration d'acquisition et détecte une variation magnétique d'intensité supérieure à un seuil donné, l'unité de contrôle peut être agencée pour commander le capteur de rotation pour qu'il emprunte la configuration d'acquisition.

Avantageusement, dans sa configuration d'acquisition, le capteur de champ magnétique peut être apte à mesurer une variation d'un champ magnétique uniquement lorsque cette variation est supérieure à un seuil donné, par exemple de 15 uT. Avantageusement, dans sa configuration d'acquisition, le capteur de rotation peut être apte à mesurer de façon continue une position angulaire absolue de l'organe de manoeuvre, par exemple avec une fréquence d'acquisition de 100 Hz. De préférence, la configuration éteinte de chacun de ces capteurs est une configuration par défaut. Chacun des capteurs pourra par ailleurs emprunter d'autres configurations d'acquisition, sans sortir du cadre de la présente invention.

La consommation électrique du capteur de rotation étant particulièrement importante, on s'assure ainsi, grâce à ces caractéristiques, qu'il ne sera activé que lorsqu'un début de rotation est détecté, à l'aide des variations de champ magnétique mesurées par le capteur de champ magnétique.

Avantageusement, l'unité de contrôle est agencée pour déterminer un état fermé de la vanne lorsqu'une position angulaire absolue de l'organe de manoeuvre détectée par le capteur de rotation est inférieure à un premier seuil donné, notamment de 360°, et un état ouvert de la vanne lorsqu'une position angulaire absolue de l'organe de manoeuvre détectée par le capteur de rotation est supérieure audit premier seuil donné. Le cas échéant, l'unité de contrôle est agencée pour :
a. Lorsque le capteur de champ magnétique est dans la configuration d'acquisition et que le capteur de vibration détecte une vibration d'intensité supérieure à un seuil donné, réinitialiser et déclencher un premier minuteur, et lorsque le premier minuteur dépasse un seuil donné et que l'unité de contrôle détermine que la vanne est dans un état fermé, commander le capteur de champ magnétique pour qu'il emprunte la configuration éteinte ;
b. Lorsque le capteur de rotation est dans la configuration d'acquisition et mesure une position angulaire absolue supérieure à un deuxième seuil donné, par exemple de 10°, réinitialiser et déclencher un deuxième minuteur, et lorsque le deuxième minuteur dépasse un seuil donné, commander le capteur de rotation pour qu'il emprunte la configuration éteinte .

On comprend ainsi que la configuration d'acquisition du capteur de rotation est maintenue, à l'aide du deuxième minuteur, tant que le capteur de rotation détecte une rotation de l'organe de manoeuvre. A l'inverse, lorsque le capteur de rotation ne détecte aucune rotation pendant un temps donné, notamment supérieur à 5 minutes, le capteur de rotation adopte alors la configuration éteinte. De même, la configuration d'acquisition du capteur de champ magnétique est maintenue, à l'aide du premier minuteur, tant que des vibrations sont détectées par le capteur de vibrations. A l'inverse, lorsque le capteur de champ magnétique ne détecte plus de variations pendant un temps donné, notamment supérieur à 30 minutes, et uniquement si la vanne est dans un état fermé, le capteur de champ magnétique adopte alors la configuration éteinte.

Ces caractéristiques permettent encore d'optimiser la consommation électrique du module, en permettant au module d'adopter des modes moins énergivores en cas d'inactivité de ses capteurs.

Par exemple, on peut par exemple distinguer :
a. Un premier mode, dit de détection de choc, dans laquelle le capteur de vibration adopte sa première configuration tandis que les autres capteurs adoptent une configuration éteinte ;
b. Un deuxième mode, dit de détection de rotation, dans lequel le capteur de vibration adopte sa deuxième configuration, le capteur de champ magnétique adopte sa configuration d'acquisition, et le capteur de rotation adopte une configuration éteinte ;
c. Un troisième mode, dit de mesure de rotation, dans lequel le capteur de vibration adopte sa deuxième configuration, le capteur de champ magnétique adopte sa configuration d'acquisition, et le capteur de rotation adopte sa configuration d'acquisition.

On constate ainsi que le troisième mode consomme plus d'énergie électrique que le deuxième mode, qui consomme lui-même plus d'énergie que le premier mode. En revanche, le premier mode ne permet que de détecter un choc ou un début d'écoulement, tandis que le deuxième mode permet de mesurer un débit d'écoulement et de détecter un début de rotation et que le troisième mode permet en plus de mesurer cette rotation. L'unité de contrôle est ainsi agencée pour contrôler les différents capteurs de sorte que le module progresse successivement vers des modes plus énergivores lorsque l'activité du module détectée par ces capteurs le justifie, et à l'inverse pour rétrograder vers des modes moins énergivores lorsque les capteurs détectent une période d'inactivité.

Dans un mode de réalisation de l'invention, le module, et notamment l'unité de contrôle, comporte une unité de calcul agencée pour déterminer une durée de vibrations détectées par le capteur de vibration pendant laquelle l'intensité de ces vibrations est supérieure à une valeur seuil donnée et pendant laquelle une position angulaire absolue de l'organe de manoeuvre mesurée par le capteurde rotation est comprise dans une plage donnée, et pour estimer une consommation minimum de fluide en sortie de ladite vanne à partir de cette durée de vibrations. Le cas échéant, l'unité de calcul pourra être agencée pour déterminer ladite durée de vibrations détectées par le capteur de vibration lorsque ce capteur est dans sa deuxième configuration d'acquisition. De préférence, l'unité de calcul pourra être agencée pour déterminer ladite durée de vibrations détectées par le capteur de vibration lorsque ce capteur est dans sa deuxième configuration d'acquisition et lorsque le capteur de rotation ne détecte pas de rotation ou est dans sa configuration éteinte.

Par exemple, l'unité de calcul peut être agencée pour sélectionner les composantes horizontales de chaque vibration mesurée par le capteur de vibration lorsqu'il adopte sa deuxième configuration, pour filtrer ces composantes horizontales avec un filtre passe haut, et pour regrouper un nombre donné de composantes horizontales filtrées successives en paquet d'échantillons. Le nombre donné d'échantillons présent dans un paquet est avantageusement déterminé en fonction de la fréquence d'acquisition ou d'échantillonnage du capteur de vibration, par exemple pour que la durée de chaque paquet d'échantillon corresponde sensiblement à une mesure de vibration par le capteur de vibrations d'une durée élémentaire donnée, par exemple d'une seconde. Le cas échéant, l'unité de calcul peut être agencée pour déterminer une moyenne de chaque paquet d'échantillons, et notamment une moyenne quadratique de chaque paquet d'échantillons. L'unité de calcul peut ainsi être agencée pour comparer cette moyenne à ladite valeur seuil donnée, et pour comptabiliser le nombre de paquets dont la moyenne dépasse cette valeur seuil donnée, ladite durée de vibrations étant ainsi déterminée à partir de ce nombre de paquets et de ladite durée élémentaire donnée.

De préférence, l'unité de calcul est agencée pour ne pas comptabiliser, pour le calcul de ladite durée de vibrations, les paquets dont la moyenne est supérieure à ladite valeur seuil donnée et qui ont été acquis lorsque le capteur de rotation détecte une variation de rotation. En effet, la manipulation de l'organe de rotation provoque des vibrations susceptibles d'être détectées indument par le capteur de vibration.

Avantageusement, l'unité de calcul comporte une mémoire dans laquelle est stocké un abaque décrivant des débits de fluide de ladite vanne pour une pluralité de plages données de position angulaire absolue de l'organe de manoeuvre, lesdites plages correspondant par exemple à des tours. En d'autres termes, ledit abaque associe un débit de fluide en sortie de ladite vanne à chaque plage de ladite pluralité de plages. Le cas échéant, l'unité de calcul peut être agencée pour :
a. Pour chaque plage, déterminer une consommation de fluide en sortie de ladite vanne à partir du débit associé à cette plage dans ledit abaque et à partir de la durée de vibrations détectées par le capteur de vibration pour cette plage, et
b. Déterminer ladite consommation minimum en sommant les consommations ainsi déterminées pour toutes les plages de ladite pluralité de plages.

Avantageusement, l'unité de calcul est agencée pour déterminer une durée, dite totale, pendant laquelle une position angulaire absolue de l'organe de manoeuvre mesurée par le capteur de rotation est comprise dans une plage donnée ; et pour estimer une consommation maximum de fluide en sortie de ladite vanne à partir de cette durée totale.

Le cas échéant, l'unité de calcul peut être agencée pour :
a. Pour chaque plage de ladite pluralité de plages, déterminer une consommation de fluide en sortie de ladite vanne à partir du débit associé à cette plage dans ledit abaque et à partir de la durée totale pour cette plage, et
b. Déterminer ladite consommation maximum en sommant les consommations ainsi déterminées pour toutes les plages de ladite pluralité de plages.

Avantageusement, le module comporte un module de communication sans-fil de données. Par exemple, ledit module de communication peut comporter un émetteur radio. Le cas échéant, l'unité de contrôle peut être agencée pour contrôler ledit module de communication sans-fil de données.

Par exemple, lorsque le capteur de rotation est dans la configuration d'acquisition et détecte une première rotation vers une position angulaire absolue supérieure audit premier seuil donné, l'unité de contrôle peut être agencée pour contrôler ledit module de communication sans-fil de données pour l'émission d'une trame radio signalant un début d'activité.

Toujours par exemple, lorsque le premier minuteur dépasse ledit seuil donné et que l'unité de contrôle détermine que la vanne est dans un état fermé, l'unité de contrôle peut être agencée pour contrôler ledit module de communication sans-fil de données pour l'émission d'une trame radio signalant une fin d'activité. Le cas échéant, ladite trame radio signalant une fin d'activité pourra comporter lesdites consommations minimum et maximum, et éventuellement l'ensemble des durées de vibration et des durées totales, déterminées par l'unité de calcul.

Si on le souhaite, lorsque le premier minuteur dépasse ledit seuil donné et que l'unité de contrôle détermine que la vanne est dans un état ouvert, l'unité de contrôle pourra être agencée pour contrôler ledit module de communication sans-fil de données l'émission d'une trame radio signalant une activité trop longue.

Selon un exemple, lorsque le capteur de vibrations détecte une inclinaison, vis-à-vis d'un axe vertical, du module supérieure ou égale à un seuil donnée, par exemple de 12°, l'unité de contrôle pourra être agencée pour contrôler ledit module de communication sans-fil de données l'émission d'une trame radio signalant un renversement du module.

Avantageusement, le module peut comporter un capteur de température. Le cas échéant, lorsqu'une température mesurée par le capteur de température devient inférieure à un seuil donné, l'unité de contrôle pourra être agencée pour contrôler ledit module de communication sans-fil de données l'émission d'une trame radio signalant un risque de gel.

Avantageusement toujours, le module peut comporter une source d'énergie électrique apte à alimenter électriquement chacun des capteurs du module.

Avantageusement, le fluide est de l'eau, et la vanne est une vanne hydraulique. Dans un mode de réalisation de l'invention, la vanne est un poteau d'incendie et l'organe de manoeuvre est un carré de manoeuvre dudit poteau.

L'invention a également pour objet un procédé d'analyse de la consommation d'un fluide en sortie d'une vanne, mis en oeuvre par un module selon l'invention.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, une vanne d'un réseau de circulation de fluide équipée d'un module d'analyse de la consommation de fluide en sortie de la vanne selon un mode de réalisation de l'invention ;
[Fig. 2] représente, schématiquement et partiellement, une vue en coupe du module de la [Fig. 1] ; et
[Fig. 3] représente, schématiquement et partiellement, un procédé d'analyse de la consommation de fluide en sortie de la vanne de la [Fig. 1], mis en oeuvre par le module selon l'invention.

Dans la description qui suit, les éléments identiques, par structure ou par fonction, apparaissant sur différentes figures conservent, sauf précision contraire, les mêmes références.

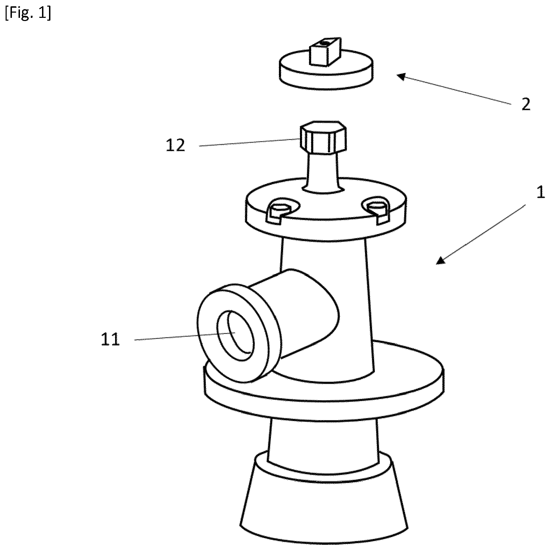

On a représenté en [Fig. 1] une vanne 1 d'un réseau de circulation de fluide. Dans l'exemple décrit, le réseau est un réseau hydraulique et la vanne 1 est un poteau d'incendie, également appelé hydrant. La vanne 1 comporte une bouche de sortie 11, destinée à être raccordée par exemple à une lance à incendie ou à un tuyau. La vanne 1 est munie d'un système d'obturation interne, par exemple un clapet, manoeuvrable depuis une poignée 12 accessible depuis le haut de la vanne 1. Cette poignée 12 est usuellement reliée à un carré de manoeuvre, dans lequel un utilisateur peut insérer une clé afin de tourner le carré, la poignée 12 et ainsi autoriser ou interdire l'écoulement de l'eau depuis la bouche de sortie 11.

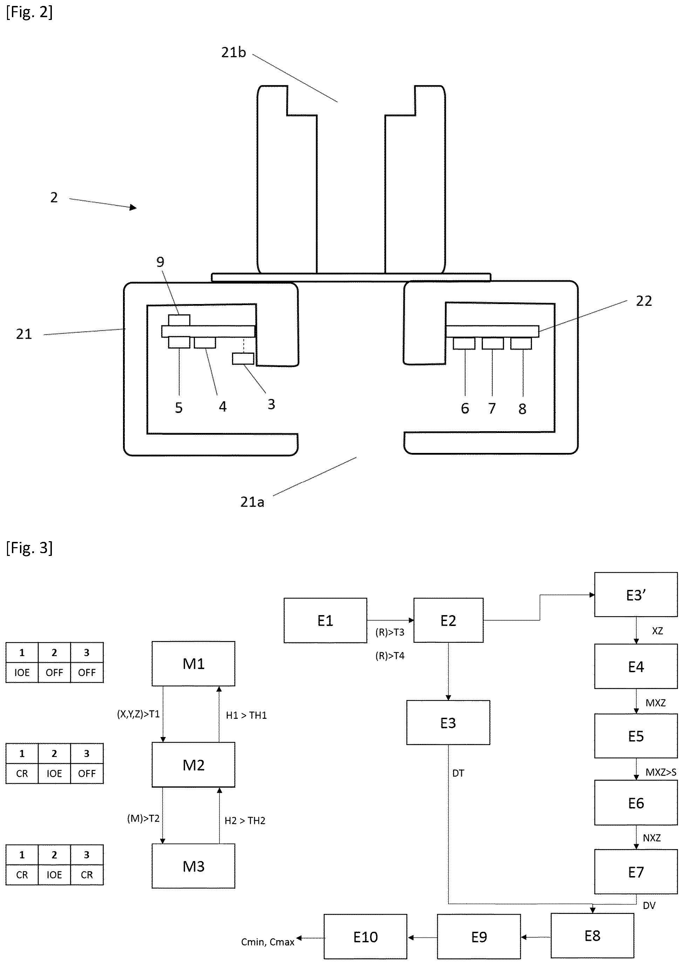

Afin de pouvoir analyser la consommation d'eau en sortie de la bouche 11 de la vanne 1, le carré de manoeuvre de la vanne 1 a été remplacé par un module d'analyse 2 selon un mode de réalisation de l'invention. Ce module 2 a été représenté en coupe en [Fig. 2].

Le module 2 comporte un boîtier 21 formant un organe de manoeuvre, et plus précisément un carré de manoeuvre, pouvant être monté rotatif sur la vanne 1. Dans l'exemple décrit, le boîtier 21 comporte un orifice inférieur 21a destiné à recevoir la poignée 12 de la vanne 1 et un orifice supérieur 21b, destiné à recevoir une clé permettant de tourner le boîtier 21, et donc de manipuler la poignée 12 et de contrôler l'écoulement de l'eau en sortie de la vanne 1. On pourrait envisager d'autres types d'organes de manoeuvre, et notamment un volant ou une manivelle, sans sortir du cadre de la présente invention.

Le module 2 comporte un accéléromètre 3, monté directement sur le boîtier 21 et agencé pour mesurer des vibrations de ce boîtier 21. Plus précisément, l'accéléromètre 3 mesure des composantes d'accélérations du boîtier 21 selon un axe vertical et deux axes horizontaux, lesquelles traduisent des vibrations du boîtier 21.

Le module 2 comporte également, montés sur une même carte de circuit imprimé 22 agencée dans le boîtier 21, un magnétomètre 4 agencé pour mesurer des variations d'un champ magnétique au voisinage du boîtier 21, un gyroscope 5 agencé pour mesurer une position angulaire absolue du boîtier 21 depuis une position initiale de référence, par exemple de 0°, une unité de contrôle 6 intégrant une unité de calcul pourvue d'une mémoire, un émetteur-récepteur radio 7 et un capteur de température 8, ainsi qu'une batterie 9 apte à alimenter électriquement chacun des capteurs et l'unité de contrôle 6.

L'unité de contrôle 6 contrôle chacun des capteurs 3, 4, 5 et 8 ainsi que l'émetteur-récepteur radio 7, et reçoit par ailleurs les données mesurées par ces capteurs.

Chacun des capteurs 3 et 4 est apte à emprunter une configuration éteinte OFF, une première configuration IOE d'acquisition de données et une deuxième configuration CR d'acquisition de données. Dans la première configuration IOE, chaque capteur 3 et 4 réalise des mesures mais ne transmet ces mesures à l'unité de contrôle 6 que si la grandeur mesurée dépasse un seuil donné (qui sera explicité ci-après). Dans la deuxième configuration, chaque capteur 3 et 4 réalise des mesures et transmet systématiquement ces mesures à l'unité de contrôle 6.

Il est à relever que pour les capteurs 3 et 4, la première configuration IOA permet au capteur de réaliser une acquisition de données selon une première fréquence d'acquisition, par exemple de 12,5 Hz, tandis que dans la deuxième configuration CR, cette acquisition est réalisée selon une deuxième fréquence d'acquisition inférieure à la première, par exemple de 6,25 Hz.

Le capteur 5 est apte à emprunter une configuration éteinte OFF et une configuration CR d'acquisition de données, dans laquelle il réalise des mesures à une fréquence d'acquisition de 100 Hz et transmet systématiquement ces mesures à l'unité de contrôle 6.

En liaison avec la [Fig. 3], on va désormais décrire un procédé d'analyse de la consommation d'eau en sortie de la vanne 1, mis en oeuvre par le module 2 et son unité de contrôle 6.

Le schéma de gauche de la [Fig. 3] représente une machine d'états des différents capteurs 3, 4 et 5, contrôlée par l'unité de contrôle 6, tandis que le schéma de droite représente le procédé d'analyse de la consommation d'eau. La machine d'états va être décrite dans un premier temps.

Dans un état M1, l'unité de contrôle 6 contrôle l'accéléromètre 3 pour qu'il adopte sa première configuration IOE, tandis qu'elle contrôle le magnétomètre 4 et le gyroscope 5 pour qu'ils adoptent la configuration éteinte OFF.

Dans cette première configuration IOE, l'accéléromètre 3 acquiert des données (X,Y,Z) relatives aux vibrations du boîtier 21, plus rapidement que dans la deuxième configuration CR. En revanche, ces données ne sont transmises à l'unité de contrôle 6 que lorsque ces vibrations (X,Y,Z) sont supérieures à un seuil donné T1, par exemple de 15 mg. Le module 2 est ainsi dans un mode dit de détection de choc, dans lequel le module 2 peut détecter un choc subi par le carré de manoeuvre 21, par exemple lorsqu'une clé est insérée dans l'orifice supérieure 21b.

Lorsque l'accéléromètre 3 détecte ainsi des vibrations (X,Y,Z) d'intensité supérieure au seuil T1, l'unité de contrôle 6 déclenche une transition de l'état M1 vers l'état M2. Dans l'état M2, l'unité de contrôle 6 contrôle l'accéléromètre 3 pour qu'il emprunte la deuxième configuration CR et le magnétomètre 4 pour qu'il emprunte la première configuration d'acquisition IOE, le gyroscope 5 restant dans la configuration éteinte OFF. Il est à noter que l'unité de contrôle 6 déclenche également un premier minuteur H1, lequel est réinitialisé à chaque choc détecté par l'accéléromètre 3, c'est-à-dire à chaque fois que les vibrations mesurées par l'accéléromètre sont supérieures au seuil donné T1.

Dans cette deuxième configuration CR, l'accéléromètre 3 transmet chaque mesure de vibrations (X,Y,Z) qu'il acquiert à l'unité de contrôle 6, tandis que le magnétomètre 4 ne transmet à cette unité de contrôle 6 que les données relatives à des variations de champ magnétique M supérieures à un seuil donné T2, par exemple de 15 uT. Le module 2 est ainsi dans un mode dit de détection de rotation, dans la mesure où ces variations de champ magnétique M traduisent un début de rotation du carré de manoeuvre 21.

Lorsque le magnétomètre 4 détecte une variation magnétique M d'intensité supérieure au seuil T2, l'unité de contrôle 6 déclenche une transition de l'état M2 vers l'état M3. Dans cet état M3, l'unité de contrôle 6 commande le gyroscope 5 pour qu'il emprunte la deuxième configuration CR, l'accéléromètre 3 restant dans la deuxième configuration CR et le magnétomètre 4 restant dans la première configuration IOE. Il est à noter que l'unité de contrôle 6 déclenche également un deuxième minuteur H2.

Dans cette deuxième configuration CR, le gyroscope 5 transmet chaque mesure de position angulaire absolue R qu'il acquiert à l'unité de contrôle 6, le module 2 étant ainsi dans un mode dit de mesure de rotation.

Lorsque le deuxième minuteur H2 dépasse une durée seuil TH2 donnée, par exemple de 5 minutes, l'unité de contrôle 6 déclenche une transition de l'état M3 vers l'état M2.

De même, lorsque le premier minuteur H1 dépasse une durée seuil TH1 donnée, par exemple de 30 minutes, et seulement si l'unité de contrôle 6 détermine que la vanne 1 présente un état fermé, l'unité de contrôle 6 déclenche une transition de l'état M2 vers l'état M1. Le procédé de détection d'un état ouvert ou fermé de la vanne 1 par l'unité de contrôle 6 sera décrit ultérieurement.

Cette machine d'état permet ainsi au module de progresser successivement vers des états plus énergivores, en activant les capteurs les plus consommateurs au fur et à mesure que les capteurs moins consommateurs détectent une activité au niveau du carré de manoeuvre. A l'inverse, la machine d'état permet au module de rétrograder vers des modes moins énergivores lorsque les capteurs détectent une période d'inactivité.

On va maintenant décrire le procédé d'analyse de la consommation d'eau mis en oeuvre par l'unité de contrôle 6.

Lorsque le module est dans le mode dit mesure de rotation, dans une étape E1, l'unité de contrôle 6 est agencée pour comparer la position angulaire absolue R du carré de manoeuvre 21, mesurée par le gyroscope 5 depuis son activation lors de la transition vers l'état M3, à un seuil de rotation donné T3, par exemple de 10°, afin de détecter un début d'activité, puis à un autre seuil de rotation donné T4, par exemple de 360°, afin de déterminer si la vanne 1 présente un état fermé ou un état ouvert. Il est à noter que lorsque la position angulaire absolue R dépasse le seuil T3, l'unité de contrôle 6 contrôle l'émetteur-radio 7 pour l'émission d'une trame radio signalant un début d'activité.

Lorsque l'unité de contrôle 6 détermine que la position angulaire absolue R mesurée par le gyroscope 5 a dépassé le seuil T4 et donc que la vanne 1 est dans un état ouvert, l'unité de contrôle 6 détermine ainsi, dans une étape E2, des paliers de rotation franchis par le carré de manoeuvre 21 au fur et à mesure de la réception des positions angulaires absolues R mesurées par le gyroscope 5. A ces fins, l'unité de contrôle 6 compare la position angulaire absolue R du carré de manoeuvre 21, mesurée depuis que le gyroscope a été activé, à des plages de position angulaire absolue prédéterminées associées à ces paliers. Dans l'exemple décrit, chaque palier de rotation correspond à une rotation de 360° du carré de manoeuvre, chaque plage de position angulaire absolue associée à un palier N étant ainsi du type [Nx360°, (N+1)x360°]. On comprend que la position angulaire absolue de l'organe de manoeuvre, mesurée depuis une position initiale de référence de l'organe de manoeuvre, notamment de 0°, peut s'étendre dans une plage complète, allant depuis la position initiale de référence jusqu'à 360° x le nombre de tours maximum que peut accomplir l'organe de manoeuvre. En d'autres termes, un palier de rotation est franchi à chaque tour accompli par le carré de manoeuvre, l'unité de contrôle 6 comptabilisant ainsi les tours réalisés par le carré de manoeuvre 21.

Pour chaque palier franchi, dans une étape E3, l'unité de calcul détermine une durée totale DT pendant laquelle la position angulaire absolue R du carré de manoeuvre 21 se trouve dans la plage de position angulaire absolue associée à ces paliers, c'est-à-dire la durée séparant ce franchissement de palier et le franchissement du palier suivant.

Il est à noter qu'à chaque franchissement d'un palier, et donc à chaque fois que la position angulaire absolue R dépasse la borne supérieure de la plage de position angulaire absolue à laquelle elle est comparé, l'unité de contrôle 6 réinitialise le deuxième minuteur H2. De la sorte, on s'assure que lorsque le capteur de rotation ne détecte aucune rotation pendant un temps donné, le module 2 adopte alors l'état M2, dont la consommation électrique est moindre que l'état M3.

Par ailleurs, à l'issue de l'étape E2, dans une étape E3' parallèle à l'étape E3, l'unité de calcul de l'unité de contrôle 6 sélectionne les composantes horizontales (X,Z) de chaque vibration mesurée par l'accéléromètre 3 depuis que la position angulaire absolue R mesurée par le gyroscope 5 a dépassé la borne inférieure de la plage de position angulaire absolue correspondant au dernier palier franchi. L'unité de contrôle 6 filtre ces composantes avec un filtre passe-haut, et regroupe ces composantes horizontales filtrées successives en paquet XZ de 7 échantillons. On notera que, compte tenu de la fréquence d'acquisition de 6,25Hz de l'accéléromètre 3 lorsqu'il adopte sa deuxième configuration CR, chaque paquet XZ représente une mesure d'environ 1 seconde.

Dans une étape E4, l'unité de calcul détermine la moyenne quadratique MXZ de chaque paquet XZ. Puis, dans une étape E5, l'unité de calcul compare cette moyenne MXZ à un seuil S, par exemple de 15 mg.

L'unité de calcul comptabilise ensuite dans une étape E6 le nombre NXZ de paquets XZ dont la moyenne MXZ dépasse le seuil S et dont les vibrations (X,Z) ont été acquises par l'accéléromètre 3 lorsque le gyroscope 5 ne détecte pas de rotation R. Ce nombre NXZ de paquets permet ainsi à l'unité de calcul de déterminer, dans une étape E7, une durée DV de vibrations détectées par l'accéléromètre 3, pendant laquelle a eu lieu un écoulement de fluide, pour la plage de position angulaire absolue correspondant au dernier palier franchi. Compte tenu du nombre d'échantillons choisis pour chaque paquet XZ, on comprend que la durée DV pour une plage de position angulaire absolue donnée correspond au nombre de paquets NXZ comptabilisé pour cette plage de position angulaire absolue

Dans une étape E8, l'unité de contrôle 6 détermine s'il y a une fin d'activité de la vanne 1. Une fin d'activité de la vanne 1 est ainsi détectée, d'une part, si la vanne 1 est considérée comme présentant un état fermé par l'unité de contrôle 6, c'est-à-dire que la position angulaire absolue R du carré de manoeuvre 1 repasse en dessous du seuil de rotation donné T4, et d'autre part si le premier minuteur H1 dépasse le seuil TH1.

En l'absence de fin d'activité, les étapes E2 à E7 continuent d'être mise en oeuvre pour comptabiliser les franchissements de paliers du carré de manoeuvre, et les durées DV et DT. On comprend ainsi que toutes les étapes E2 à E7 sont ainsi mises en oeuvre tant que des données sont transmises de façon continue par l'accéléromètre 3, c'est-à-dire qu'il adopte la deuxième configuration d'acquisition CR et que la vanne 1 est considérée comme présentant un état ouvert par l'unité de détection 6.

En cas de fin de détection d'une fin d'activité, dans une étape E9, l'unité de calcul détermine une consommation minimum Cmin d'eau en sortie de la vanne 1 à partir des durées de vibrations DV et une consommation maximum d'eau Cmax en sortie de la vanne 1 à partir des durées totales DT.

A ces fins, un abaque, décrivant des débits d'eau de ladite vanne pour chacune des plages de position angulaire absolue associée à un palier, est stocké dans la mémoire de l'unité de calcul. L'unité de calcul peut ainsi déterminer, pour chacune de ces plages de position angulaire absolue, une consommation minimum d'eau en sortie de la vanne 1 à partir du débit associé à cette plage de position angulaire absolue dans cet abaque et à partir de la durée de vibrations DV déterminée à l'étape E5 pour cette plage de position angulaire absolue. De façon similaire, l'unité de calcul peut déterminer, pour chacune de ces plages de position angulaire absolue, une consommation maximum d'eau en sortie de la vanne 1 à partir du débit associé à cette plage de position angulaire absolue dans cet abaque et à partir de la durée totale DT déterminée à l'étape E2 pour cette plage de position angulaire absolue.

L'unité de calcul peut alors déterminer la consommation minimum Cmin et la consommation maximum Cmax en sommant les consommations minimum et maximum déterminées pour toutes les plages de position angulaire absolue.

Enfin, dans une étape E10, l'unité de contrôle 6 contrôle l'émetteur-radio 7 pour l'émission d'une trame radio signalant une fin d'activité comportant lesdites consommations minimum Cmin et maximum Cmax, et éventuellement l'ensemble des durées de vibration DV et des durées totales DT.

On va maintenant décrire un exemple de mise en oeuvre de ce procédé lors d'une utilisation de la vanne 1. Au repos, la machine d'état est dans l'état M1, le module étant ainsi dans le mode de détection de choc.

Afin d'utiliser la vanne 1, un utilisateur introduit une clé dans l'orifice 21b du carré de manoeuvre. Le choc de clé entraine ainsi un changement d'état vers l'état M2, le module étant alors dans le mode de détection de rotation. Puis l'utilisateur tourne cette clé, et fait donc pivoter le carré de manoeuvre 21 pour déclencher un écoulement d'eau. La machine d'état transite ainsi vers l'état M3, et le procédé d'analyse se déclenche alors au niveau de l'étape E1, et passe alors à l'étape E2 dès que la position angulaire absolue R du carré de manoeuvre 21 dépasse le seuil T4 et donc que dès que l'unité de contrôle 6 détecte un état ouvert de la vanne 1.

A ce stade, l'unité de contrôle 6 reçoit donc de façon continue les données relatives aux vibrations mesurées par l'accéléromètre 3 et aux position angulaire absolue R mesurées par le gyroscope 5, et peut donc déterminer les durées DV et DT pour une première plage de position angulaire absolue du carré de manoeuvre, au travers des étapes E3 à E7.

L'utilisateur continue ainsi de tourner la clé jusqu'à ce que le débit d'eau en sortie de la bouche 11 suffise à ces besoins, et arrête alors de tourner la clé. Pendant ces tours de clé, l'unité de contrôle 6 continue de recevoir des données de l'accéléromètre 3 et du gyroscope 5 et de déterminer les durées DV et DT pour les plages de position angulaire absolue suivantes au fur et à mesure que le carré de manoeuvre 21 franchit des paliers de rotation.

Une fois le débit souhaité atteint, le deuxième minuteur H2 va dépasser le seuil TH2, dans la mesure où le carré de rotation 21 ne franchira plus de palier de rotation. La machine d'état va alors transiter vers l'état M2, et le module sera alors en attente d'une rotation. Pour autant, l'unité de contrôle 6 continue de recevoir des données de l'accéléromètre 3 et continue donc de déterminer les durées DV et DT pour la plage de position angulaire absolue atteinte par le carré de manoeuvre. Il est à noter que, dans la mesure où la vanne est dans un état ouvert, la machine d'état ne peut pas transiter vers l'état M1.

Lorsque l'utilisateur a terminé d'utiliser la vanne 1, il pivote le carré de manoeuvre dans le sens inverse, de sorte que la machine d'état transite de nouveau vers l'état M3 pour que le gyroscope transmette des données de rotation R à l'unité de contrôle.

La position angulaire absolue R du carré de manoeuvre 21 va alors repasser en dessous du seuil T4, puis du seuil T3, jusqu'à ce que l'utilisateur ait refermé la vanne 1, l'eau s'arrêtant alors de s'écouler.

Chacun des minuteurs H2 et H1 va alors dépasser le seuil TH2 et TH1, entraînant une transition successive de la machine d'état vers les états M2 puis M1. En parallèle, l'unité de contrôle 6 va alors détecter une fin d'activité de la vanne 1, dans l'étape E8, calculer les consommations Cmin et Cmax dans l'étape E9 et déclencher l'émission d'une trame de fin d'activité dans l'étape E10.

Il est à relever que l'unité de contrôle 6 met en oeuvre différents mécanismes de surveillance du fonctionnement du module, notamment au moyen des données fournies par l'accéléromètre 3, par le gyroscope 5 et le capteur de température 8. En particulier, des trames radio pourront être émises par l'émetteur-récepteur radio 7 dans l'un ou plusieurs des cas suivants :
a. Lorsque la température mesurée par le capteur 8 passe en dessous d'un seuil donné et que le gyroscope 5 détecte une position angulaire absolue R supérieure au deuxième seuil T4;
b. Lorsque la position angulaire absolue R mesurée par le gyroscope dépasse un seuil critique donné pendant une durée supérieure à un seuil critique donné ;
c. Lorsqu'une inclinaison de la vanne 1, déterminée à partir des données mesurées par l'accéléromètre dépasse un seuil donné ;
d. Lorsqu'une vitesse de rotation de la vanne 1 autour d'un axe vertical, déterminée à partir des données mesurées par le gyroscope 5, dépasse un seuil critique donné.

La description qui précède explique clairement comment l'invention permet d'atteindre les objectifs qu'elle s'est fixée, et notamment en proposant un module d'analyse de la consommation d'un fluide en sortie d'une vanne qui, d'une part, comporte un organe de manoeuvre capable de s'interfacer avec la vanne et, d'autre part, emploie des capteurs de vibration et de rotation afin d'estimer la consommation de fluide en sortie de la vanne. On comprend ainsi qu'il n'y a pas lieu de remplacer la vanne pour obtenir une estimation de la consommation de fluide en sortie de la vanne et que cette solution ne nécessite pas de s'immiscer dans la zone de circulation de fluide de la vanne.

On pourra en particulier envisager d'autres types d'organe de manoeuvre que celui décrit, et notamment un volant ou une manivelle.

## Revendications

1. Module (2) d'analyse de la consommation d'un fluide en sortie d'une vanne (1), comprenant :
a. un organe de manoeuvre rotatif (21) destiné à être monté sur la vanne et apte à contrôler l'écoulement du fluide en sortie de la vanne,
b. un capteur de vibration (3) agencé pour mesurer des vibrations (X,Y,Z) de l'organe de manoeuvre,
c. un capteur de rotation (5) agencé pour mesurer une rotation (R) de l'organe de manoeuvre , **caractérisé en ce que** le module comprend:
d. une unité de contrôle (6) agencée pour détecter un écoulement de fluide en sortie de la vanne à partir des vibrations de l'organe de manoeuvre mesurées par le capteur de vibration et pour déterminer un débit (Cmin, Cmax) de cet écoulement de fluide à partir des vibrations de l'organe de manoeuvre mesurées par le capteur de vibration et de la rotation de l'organe de manoeuvre mesurée par le capteur de rotation.

2. Module (2) selon la revendication précédente, **caractérisé en ce qu'**il comporte un capteur de champ magnétique (4) et **en ce que** l'unité de contrôle (6) est agencée pour déterminer un débit (Cmin, Cmax) de l'écoulement du fluide à partir des vibrations (X,Y,Z) de l'organe de manoeuvre (21) mesurées par le capteur de vibration (3), de la rotation (R) de l'organe de manoeuvre mesurée par le capteur de rotation (5) et des variations du champ magnétique (M) mesurées par le capteur de champ magnétique.

3. Module (2) selon l'une des revendications précédentes, dans lequel le capteur de vibration (3) est apte à emprunter une première configuration d'acquisition (IOE) et une deuxième configuration d'acquisition (CR), distincte de la première ; **caractérisé en ce que**, lorsque le capteur de vibration est dans la première configuration et détecte une vibration (X,Y,Z) d'intensité supérieure à un seuil donné (T1), l'unité de contrôle (6) est agencée pour commander le capteur de vibration pour qu'il emprunte la deuxième configuration.

4. Module (2) selon les revendications 2 et 3, dans lequel le capteur de rotation (5) est apte à emprunter une configuration éteinte (OFF) et une configuration d'acquisition (IOE, CR) ; **caractérisé en ce que**, lorsque le capteur de vibration est dans la deuxième configuration et détecte une vibration (X, Y, Z) d'intensité supérieure à un seuil donné et/ou lorsque le capteur de champ magnétique (4) détecte une variation magnétique (M) d'intensité supérieure à un seuil donné (T2), l'unité de contrôle (6) est agencée pour commander le capteur de rotation pour qu'il emprunte la configuration d'acquisition.

5. Module (2) selon la revendication précédente, dans lequel l'unité de contrôle (6) est agencée pour déterminer un état fermé de la vanne (1) lorsqu'une position angulaire absolue (R) de l'organe de manoeuvre (21) détectée par le capteur de rotation (5) est inférieure à un premier seuil donné (T4) et un état ouvert de la vanne lorsqu'une position angulaire absolue de l'organe de manoeuvre détectée par le capteur de rotation est supérieure audit premier seuil donné ; et dans lequel l'unité de contrôle est agencée pour :
a. Lorsque le capteur de champ magnétique (5) est dans la configuration d'acquisition (IOE) et que le capteur de vibration (3) détecte une vibration (X,Y,Z) d'intensité supérieure à un seuil donné (T1), réinitialiser et déclencher un premier minuteur (H1), et lorsque le premier minuteur dépasse un seuil donné (TH1) et que l'unité de contrôle détermine que la vanne est dans un état fermé, commander le capteur de champ magnétique pour qu'il emprunte la configuration éteinte (OFF),
b. Lorsque le capteur de rotation est dans la configuration d'acquisition (CR) et mesure une position angulaire absolue (R) supérieure à un deuxième seuil donné (T3), réinitialiser et déclencher un deuxième minuteur (H2), et lorsque le deuxième minuteur dépasse un seuil donné (TH2), commander le capteur de rotation pour qu'il emprunte la configuration éteinte (OFF).

6. Module (2) selon l'une des revendications précédentes, **caractérisé en ce qu'**il comporte une unité de calcul agencée pour déterminer une durée de vibrations (DV) détectées par le capteur de vibration (3) pendant laquelle l'intensité de ces vibrations (X,Y,Z) est supérieure à une valeur seuil donnée (T1) et pendant laquelle une position angulaire absolue (R) de l'organe de manoeuvre (21) mesurée par le capteur de rotation (5) est comprise dans une plage donnée ([Nx360°, (N+1)x360°]), et pour estimer une consommation minimum (Cmin) de fluide en sortie de ladite vanne (1) à partir de cette durée de vibrations.

7. Module (2) selon l'une des revendications précédentes, dans lequel l'unité de calcul est agencée pour déterminer une durée (DT), dite totale, pendant laquelle une position angulaire absolue(R) de l'organe de manoeuvre (21) mesurée par le capteur de rotation (5) est comprise dans une plage donnée ([Nx360°, (N+1)x360°]) ; et pour estimer une consommation maximum (Cmax) de fluide en sortie de ladite vanne (1) à partir de cette durée totale.

8. Module (2) selon l'une des revendications 6 ou 7, **caractérisé en ce qu'**il comporte un module de communication sans-fil de données (7) .

9. Module (2) selon l'une des revendications précédentes, dans lequel la vanne (1) est un poteau d'incendie et l'organe de manoeuvre (21) est un carré de manoeuvre dudit poteau.

10. Procédé d'analyse de la consommation d'un fluide en sortie d'une vanne (1), mis en oeuvre par un module (2) selon l'une des revendications précédentes.

## Patentansprüche

1. Modul (2) zum Analysieren des Verbrauchs eines Fluids an einem Ausgang eines Ventils (1), umfassend:
a. ein rotierendes Betätigungselement (21), das dazu bestimmt ist, an dem Ventil montiert zu werden, und geeignet ist, um die Strömung des Fluids an dem Ausgang des Ventils zu steuern,
b. einen Vibrationssensor (3), der zum Messen von Vibrationen (X, Y, Z) des Betätigungselements angeordnet ist,
c. einen Rotationssensor (5), der zum Messen einer Rotation (R) des Betätigungselements angeordnet ist, **dadurch gekennzeichnet, dass** das Modul umfasst:
d. eine Steuereinheit (6), die zum Feststellen einer Fluidströmung an dem Ausgang des Ventils aus Vibrationen des Betätigungselements, die durch den Vibrationssensor gemessen werden, und zum Bestimmen eines Durchflussstroms (Cmin, Cmax) dieser Fluidströmung aus Vibrationen des Betätigungselements, die durch den Vibrationssensor gemessen werden, und der Rotation des Betätigungselements, die durch den Rotationssensor gemessen wird, angeordnet ist.

2. Modul (2) nach dem vorstehenden Anspruch,
**dadurch gekennzeichnet, dass** es einen Magnetfeldsensor (4) umfasst und **dass** die Steuereinheit (6) zum Bestimmen eines Durchflussstroms (Cmin, Cmax) der Strömung des Fluids aus Vibrationen (X, Y, Z) des Betätigungselements (21), die durch den Vibrationssensor (3) gemessen werden, der Rotation (R) des Betätigungselements, die durch den Rotationssensor (5) gemessen wird, und Schwankungen des Magnetfelds (M), die durch den Magnetfeldsensor gemessen werden, angeordnet ist.

3. Modul (2) nach einem der vorstehenden Ansprüche, wobei der Vibrationssensor (3) geeignet ist, um eine erste Erfassungskonfiguration (IOE) und eine zweite Erfassungskonfiguration (CR) anzunehmen, die sich von der ersten unterscheidet; **dadurch gekennzeichnet, dass,** wenn der Vibrationssensor in der ersten Konfiguration ist und eine Vibration (X, Y, Z) mit einer Intensität feststellt, die größer als ein gegebener Schwellenwert (T1) ist, die Steuereinheit (6) zum Anweisen des Vibrationssensors angeordnet ist, damit er die zweite Konfiguration annimmt.

4. Modul (2) nach Anspruch 2 und 3, wobei der Rotationssensor (5) geeignet ist, um eine ausgeschaltete Konfiguration (OFF) und eine Erfassungskonfiguration (IOE, CR) anzunehmen; **dadurch gekennzeichnet, dass,** wenn der Vibrationssensor in der zweiten Konfiguration ist und eine Vibration (X, Y, Z) mit einer Intensität feststellt, die größer als ein gegebener Schwellenwert ist, und/oder wenn der Magnetfeldsensor (4) eine magnetische Schwankung (M) mit einer Intensität feststellt, die größer als ein bestimmter Schwellenwert (T2) ist, die Steuereinheit (6) zum Anweisen des Rotationssensors angeordnet ist, damit er die Erfassungskonfiguration annimmt.

5. Modul (2) nach dem vorstehenden Anspruch, wobei die Steuereinheit (6) zum Bestimmen eines geschlossenen Zustands des Ventils (1), wenn eine absolute Winkelposition (R) des Betätigungselements (21), die durch den Rotationssensor (5) festgestellt wird, kleiner als ein erster gegebener Schwellenwert (T4) ist, und eines geöffneten Zustands des Ventils angeordnet ist, wenn eine absolute Winkelposition des Betätigungselements, die durch den Rotationssensor festgestellt wird, größer als der erste gegebene Schwellenwert ist; und wobei die Steuereinheit angeordnet ist zum:
a. wenn der Magnetfeldsensor (5) in der Erfassungskonfiguration (IOE) ist und der Vibrationssensor (3) eine Vibration (X, Y, Z) mit einer Intensität feststellt, die größer als ein bestimmter Schwellenwert (T1) ist, Zurücksetzen und Auslösen eines ersten Timers (H1), und wenn der erste Timer einen gegebenen Schwellenwert (TH1) überschreitet und die Steuereinheit bestimmt, dass das Ventil in einem geschlossenen Zustand ist, Anweisen des Magnetfeldsensors, damit er die ausgeschaltete Konfiguration (OFF) annimmt,
b. wenn der Rotationssensor in der Erfassungskonfiguration (CR) ist und eine absolute Winkelposition (R) misst, die größer als ein zweiter vorgegebener Schwellenwert (T3) ist, Zurücksetzen und Auslösen eines zweiten Timers (H2), und wenn der zweite Timer einen vorgegebenen Schwellenwert überschreitet (TH2), Anweisen des Rotationssensor, damit er die ausgeschaltete Konfiguration (OFF) annimmt.

6. Modul (2) nach einem der vorstehenden Ansprüche,
**dadurch gekennzeichnet, dass** es eine Berechnungseinheit umfasst, die zum Bestimmen einer Dauer von Vibrationen (DV), die durch den Vibrationssensor (3) festgestellt werden, während der die Intensität dieser Vibrationen (X,Y,Z) größer als ein vorgegebener Schwellenwert (T1) ist und während der eine absolute Winkelposition (R) des Betätigungselements (21), die durch den Rotationssensor (5) gemessen wird, in einem vorgegebenen Bereich ([Nx360°, (N+1)x360°]) enthalten ist, und zum Schätzen eines minimalen Fluidverbrauchs (Cmin) an dem Auslass des Ventils (1) aus dieser Vibrationsdauer angeordnet ist.

7. Modul (2) nach einem der vorstehenden Ansprüche, wobei die Berechnungseinheit zum Bestimmen einer sogenannten Gesamtdauer (DT), während der eine absolute Winkelposition (R) des Betätigungselements (21), die durch den Rotationssensor (5) gemessen wird, in einem vorgegebenen Bereich ([Nx360°, (N+1)x360°]) enthalten ist; und zum Schätzen eines maximalen Fluidverbrauchs (Cmax) an dem Auslass des Ventils (1) aus dieser Gesamtdauer angeordnet ist.

8. Modul (2) nach einem der Ansprüche 6 oder 7,
**dadurch gekennzeichnet, dass** es ein drahtloses Datenkommunikationsmodul (7) aufweist.

9. Modul (2) nach einem der vorstehenden Ansprüche, wobei das Ventil (1) ein Überflurhydrant ist und das Betätigungselement (21) ein Betätigungsvierkant des Hydranten ist.

10. Verfahren zum Analysieren des Verbrauchs eines Fluids an dem Ausgang eines Ventils (1), das durch ein Modul (2) nach einem der vorstehenden Ansprüche implementiert wird.

## Claims

1. A module (2) for analyzing fluid consumption at the outlet of a valve (1), comprising:
a. a rotary operating member (21) designed to be mounted on the valve and able to control fluid flow out of the valve,
b. a vibration sensor (3) arranged to measure vibrations (X, Y, Z) of the operating member,
c. a rotation sensor (5) arranged to measure a rotation (R) of the operating member, **characterized in that** the module comprises:
d. a control unit (6) arranged to detect a fluid flow at the valve outlet from the vibrations of the operating member measured by the vibration sensor and to determine a flow rate (Cmin, Cmax) of this fluid flow from the vibrations of the operating member measured by the vibration sensor and the rotation of the operating member measured by the rotation sensor.

2. The module (2) according to the preceding claim, **characterized in that** it comprises a magnetic field sensor (4) and **in that** the control unit (6) is arranged to determine a flow rate (Cmin, Cmax) of the fluid flow from the vibrations (X, Y, Z) of the operating member (21) measured by the vibration sensor (3), the rotation (R) of the operating member measured by the rotation sensor (5) and the magnetic field variations (M) measured by the magnetic field sensor.

3. The module (2) according to one of the preceding claims, wherein the vibration sensor (3) is able to assume a first acquisition configuration (IOE) and a second acquisition configuration (CR), distinct from the first; **characterized in that,** when the vibration sensor is in the first configuration and detects a vibration (X, Y, Z) of intensity greater than a given threshold (T1), the control unit (6) is arranged to command the vibration sensor to assume the second configuration.

4. The module (2) according to claims 2 and 3, wherein the rotation sensor (5) is able to assume an off configuration (OFF) and an acquisition configuration (IOE, CR); **characterized in that,** when the vibration sensor is in the second configuration and detects a vibration (X, Y, Z) of intensity greater than a given threshold and/or when the magnetic field sensor (4) detects a magnetic variation (M) of intensity greater than a given threshold (T2), the control unit (6) is arranged to command the rotation sensor to assume the acquisition configuration.

5. The module (2) according to the preceding claim, wherein the control unit (6) is arranged to determine a closed state of the valve (1) when an absolute angular position (R) of the operating member (21) detected by the rotation sensor (5) is less than a first given threshold (T4) and an open state of the valve when an absolute angular position of the operating member detected by the rotation sensor is greater than said first given threshold; and wherein the control unit is arranged to:
a. When the magnetic field sensor (5) is in the acquisition configuration (IOE) and the vibration sensor (3) detects a vibration (X, Y, Z) of intensity greater than a given threshold (T1), reset and trigger a first timer (H1), and when the first timer exceeds a given threshold (TH1) and the control unit determines that the valve is in a closed state, command the magnetic field sensor to assume the off configuration (OFF),
b. When the rotation sensor is in the acquisition configuration (CR) and measures an absolute angular position (R) above a given second threshold (T3), reset and trigger a second timer (H2), and when the second timer exceeds a given threshold (TH2), command the rotation sensor to assume the off configuration (OFF).

6. The module (2) according to one of the preceding claims,
**characterized in that** it comprises a calculation unit arranged to determine a duration of vibrations (DV) detected by the vibration sensor (3) during which the intensity of these vibrations (X, Y, Z) is greater than a given threshold value (T1) and during which an absolute angular position (R) of the operating member (21) measured by the rotation sensor (5) lies within a given range ([Nx360°, (N+1)x360°]), and to estimate a minimum fluid consumption (Cmin) at the outlet of said valve (1) from this vibration duration.

7. The module (2) according to one of the preceding claims, wherein the calculation unit is arranged to determine a duration (DT), referred to as total duration, during which an absolute angular position (R) of the operating member (21) measured by the rotation sensor (5) lies within a given range ([Nx360°, (N+1)x360°]); and to estimate a maximum consumption (Cmax) of fluid at the outlet of said valve (1) from this total duration.

8. The module (2) according to one of claims 6 or 7, **characterized in that** it comprises a wireless data communication module (7).

9. The module (2) according to one of the preceding claims, wherein the valve (1) is a fire hydrant and the operating member (21) is a square stud of said hydrant.

10. The method for analyzing fluid consumption at the outlet of a valve (1), implemented by a module (2) according to one of the preceding claims.
